# EUROPEAN PATENT SPECIFICATION

(11) **EP 1 730 031 B1**
(45) Date of publication and mention of the grant of the patent: **15.08.2007**
(21) Application number: 05734491.3
(22) Date of filing: 30.03.2005
(51) Int. Cl.: B64C 25/36

(54) **AIRCRAFT WHEEL ASSEMBLY**
FLUGZEUGRADANORDNUNG
ENSEMBLE ROUE D'AERONEF

(30) Priority: 01.04.2004 GB 0407470
(43) Date of publication of application: 13.12.2006
(73) Proprietor: Dunlop Aerospace Limited, Coventry, West Midlands CV6 4AA (GB)
(72) Inventor: FISHER, Martin, James, Dunlop Aerospace Limited, Coventry, West Midlands CV6 4AA (GB)
(74) Representative: Symons, Rupert Jonathan
(86) International application number: PCT/GB2005/001245
(87) International publication number: WO 2005/095207

(56) References cited:
- EP-A- 0 445 851
- US-A- 3 915 266
- US-A- 5 471 361
- US-A1- 2004 124 307
- US-B1- 6 538 426

## Description

The invention relates to an aircraft wheel assembly and in particular, to one in which the assembly incorporates an axle housing sensing means, typically tyre pressure sensing means such as a tyre pressure indicating system (TPIS). Such a wheel would be a nose wheel. In the case of a main wheel assembly where an antiskid brake control is present, wheel speed sensing means, usually a wheel speed transducer (WST) will also be incorporated.

Two major areas of concern to the aircraft industry are aircraft weight and noise. Reducing aircraft weight gives benefits in performance and cost of operation. This is especially true in the case of wheel and brake components that are only used during ground based manoeuvres during the take-off and landing cycles but are carried with the aircraft throughout the flight. Such wheel and brake components have to be lifted into a storage bay during flight.

Aircraft noise is an area of increasing concern as the pressure for more flights out of busy airports in close proximity to residential housing increases. A significant source of aircraft noise during aircraft landing is created by the flow of air over undercarriage components when the landing gear is lowered from the storage bay when the aircraft is at low altitude during final approach to the runway.

All components of the landing gear, including the wheels, can contribute to the generation of noise when exposed to the air stream during landing so any reduction in the noise generation by any component will contribute to a quieter aircraft.

Attempts have been made to reduce noise from aircraft wheels during landing by using shields to smooth airflow over the wheel, however, such shields can reduce the flow of air required for cooling brakes, leading to thermal management problems and longer turn around times for aircraft. Where the axle protrudes beyond the wheel rim position it is found that the axle end and any fixing mechanism on the axle are a major source of the wheel noise and are not affected by such shields. Nose wheels are typically configured with an axle extending beyond the wheel rim.

Aircraft wheel and brake assemblies are typically mounted on a hollow axle, within which are mounted other components such as, for example, wheel speed transducers and the tyre pressure indicating system. To prevent the ingress of dirt and moisture to mechanical and electronic components around and within the axle it is common practice to fit a cover known as a "hubcap" over the end of the axle.

An example of such a hubcap is disclosed in EP 0445851. EP 0445851 discloses a hubcap for an aircraft wheel which includes an internal spider which engages an anti-skid transducer located in the wheel hub. The hubcap disclosed in EP 0445851 is a one-piece construction and has a conical configuration in order to provide increased strength as well as increased air flow inside the hubcap for improved heat dissipation.

It is one object of this invention to provide an aircraft wheel assembly incorporating an improved cover known as a hubcap.

It is another object of this invention to reduce the weight of a wheel assembly. It is a further object of this invention to reduce noise associated with airflow over a wheel assembly.

In one aspect the invention provides an aircraft wheel assembly including an axle housing means for sensing wheel speed one end of the axle being covered by a cap member, the cap member comprising a generally cup-like body having an end wall towards the free end of the axle, and means for driving the wheel speed sensing means, the side wall of the body having at least one stiffening formation arranged to influence the flow of air around the exposed exterior of the cap member in flight whereby to reduce the level of noise generated. Preferably the formation comprises a rib or fin on the side wall of the cup-like body. Preferably the formation extends from the end wall towards the open end of the cup-like body and increases in thickness towards the open end.

Preferably at least one formation is hollow.

Preferably there is a plurality of formations spaced substantially evenly about the cap member.

Preferably the cup-like body tapers radially outwardly away from the end wall.

Preferably the axle protrudes beyond a wheel rim of the wheel assembly.

In the case of a main wheel, the aircraft wheel assembly will incorporate means for sensing tyre pressure and the cap member will incorporate means for mounting the tyre pressure sensing means.

The hubcap may be made of a metal or alloy or plastics or composite using suitable manufacturing techniques. Examples include aluminium alloy ; steel, titanium, magnesium; polymer matrix composites and metal matrix composites.

In another aspect the invention extends to the hubcap itself. More particularly, the invention extends to a hubcap for an aircraft wheel assembly which has an axle housing means for sensing wheel speed and means for sensing type pressure, the hub cap comprising a generally cup-like body having an end wall, the body having a flange at its mouth for engagement with clamping means by which the hub cap is fixed over a free end of the axle, a slot extending from the flange into the side wall of the body to receive components of the means for sensing tyre pressure , the inner surface of the end wall having formations for engagement with the wheel speed sensing means, ribs being spaced about the exterior of the side wall of the body.

Preferably the ribs are hollow.

Preferably the side wall of the body flares radially outwardly away from the end wall to the flange.

A hubcap of the invention is useful in the case of a nose wheel axle when it will reduce the noise caused by airflow over the tyre, nose wheel and axle assembly. It is also useful in the case of a main wheel axle when the airflow is over the tyre, main wheel brake and axle assembly.

The invention extends to a method of flying an aircraft in relatively noise reduced manner using an aircraft incorporating wheel assemblies having a hubcap of the invention.

In order that the invention may be well understood, it will now be described by way of illustration only with reference to the accompanying diagrammatic drawings, in which:
Figure 1 (a) is a perspective view from one end of the exterior of a known hubcap;
Figure 1 (b) is a perspective view from the open end of the cap of Figure 1 (a) showing the inside;
Figure 2(a) is a view showing the interior of a hubcap of the invention for a main wheel, and
Figure 2(b) is an end view showing the exterior of the hubcap of figure 2(a).

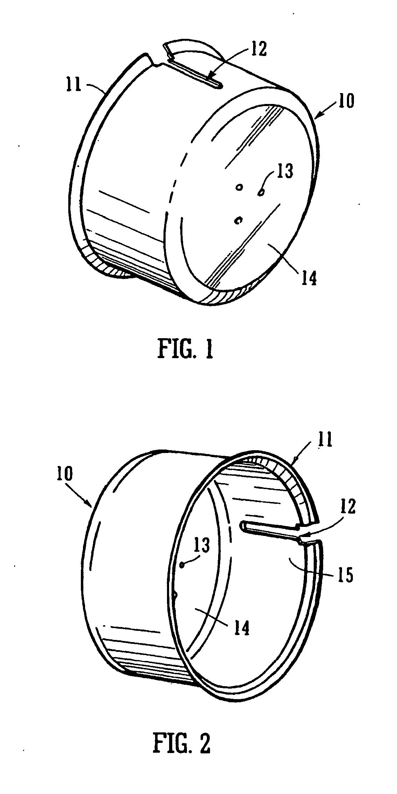

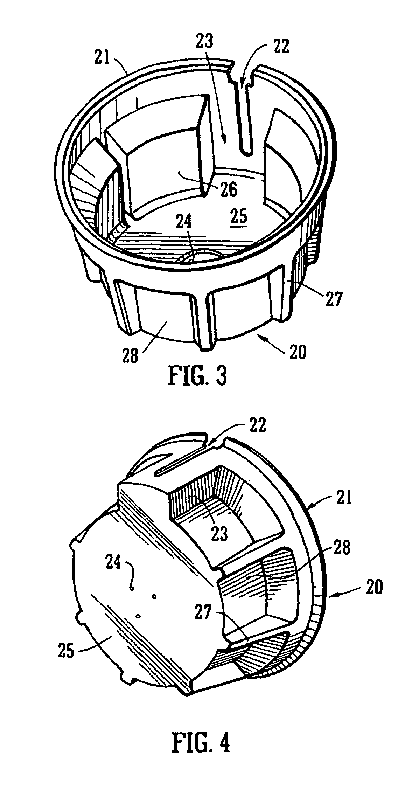

The known hubcap 10 of Figures 1 (a) and 1 (b) comprises a cup-like body having a flange 11 at the mouth onto which a "V" clamp (not shown) is affixed to hold the hubcap to the wheel (not shown). The body is parallel sided. A slot 12 extends from the open end of the cap in a side wall for location of TPIS components (not shown). A number of locations 13 are present in the end wall 14 of the hubcap equally spaced around the centre point for driving the WST (not shown).

The hubcap 10 fits over the end of the wheel axle (not shown) with clearance between the axle outer diameter and the inner surface 15 and end wall 14 of the hubcap. The axle is hollow and houses wheel speed transducers and the TPIS. The free end of the axle protrudes beyond the wheel rim.

It is an essential feature of the hubcap that it should have sufficient strength and stiffness to mount the TPIS and drive the WST during service. The wall thickness of such a known hubcap with an overall length of 137 mm is 3 mm.

A hubcap of the invention is shown in Figures 2(a) and 2(b). The hubcap comprises a cup-like body 28 having an end wall 25 and is made of aluminium alloy. The body flares outwardly from the end wall 25 to a lip flange 21 at the open mouth of the body, as can clearly be seen in Figure 2 (b). The flange 21 is considerably wider in diameter than the end wall 25 except for a portion 23 of the body 28 shaped to accommodate a slot 22 which receives part of the TPIS. As a result, a ledge is formed. Drive locations 24 are present on the inner surface of the end wall 25 for the WST. The hubcap 20 is fitted over the end of the axle (not shown) in the usual way by means of a V-clamp, also not shown. The cup-like body 28 is dimensioned so that a clearance is provided between the outer diameter of the wheel axle (not shown) and the inner surface 26 and end wall 25 of the hubcap.

Ribs or fins 27 are equally spaced about the exterior of the body 28 on each side of the slot 22. The ribs 27 are hollow. The ribs 27 have a tapered height profile with a minimum height of 12.5 mm at the closed end of the hubcap increasing to a maximum height of 26.7 mm towards the ledge adjacent the open end of the hubcap. The dimension across the width of the ribs 27 is 16mm and the overall length of the ribs is 97.3 mm. The number of fins will be between 2 and 10, preferably between 4 and 8. The presence of the ribs 27 provides an improved stiffness, thereby allowing a reduction in the wall thickness to 2 mm for a component of equivalent length to that described in Figure 1 with a reduction in weight in the order of 1 kg. Such a weight reduction for each wheel assembly is significant because between 4 and 20 main wheels and 2 or 4 nose wheels might be fitted to an aircraft.

The hubcap shown is for the main wheel axle of a large civil airliner fitted with 20 main wheels and 4 nose wheels. The total weight saving for such aircraft by the use of hubcaps of the invention is in the order of 20 kg.

It has been found that the reduction in weight is not the only benefit of a hubcap of the invention. Computational Fluid Dynamics (CFD) analysis of airflow around the complete tyre, wheel, brake and axle has shown that the ribs 27 smooth the airflow around the hubcap. In flight and with the landing gear down, noise is generated by pressure fluctuations resulting from complex flow patterns and separating flow regions. The reduction in noise level by use of a hub cap of the invention is a result of reducing such pressure fluctuations. The noise reduction benefit of the hubcap is particularly pronounced where the hubcap protrudes outside the wheel rim and has found to reduce noise levels at each wheel by up to 3dB.

It has been found in CFD analysis that a single or double curvature to the rib or fin profile has additional benefits in noise reduction over the straight section shown in the embodiment of Figure 2 (a) and (b). However, this increases design, manufacturing and logistics complexity as the curvature is required to be left and right handed for fitment to wheels on each side of the landing gear.

It is also preferred that the fins should be of a tapered form with the lowest part of the taper being at the closed end of the hubcap furthest from the wheel and the tallest part of the taper being at the open end of the hubcap closest to the wheel. The height dimension of the tapered fin should be in the range 0 mm to 25 mm, preferably 5 mm to 20 mm at the lowest part and 5 mm to 50 mm, preferably 15 mm to 35 mm at the tallest part.

The invention is not limited to the embodiment shown. Not all the ribs need be the same. Depending on the material used and its shape or size the ribs may be solid. The wall of the cap may or may not be parallel sided.

## Claims

1. An aircraft wheel assembly including an axle housing means for sensing wheel speed, one end of the axle being covered by a cap member (20), the cap member comprising a generally cup-like body (28) having an end wall (25) towards the free end of the axle and means for driving the wheel speed sensing means, **characterised in that** the side wall of the body having at least one stiffening formation arranged to influence the flow of air around the exposed exterior of the cap member (20) in flight whereby to reduce the level of noise generated.

2. An assembly according to Claim 1, wherein the at least one formation comprises a rib or fin (27) on the side wall of the cup-like body (28).

3. An assembly according to Claim 1 or 2, wherein at least one formation extends from the end wall (25) to an open end of the cup-like body (28) and increase in thickness towards the open end.

4. An assembly according to Claim 1, 2 or 3, wherein at least one formation is hollow.

5. An assembly according to any preceding Claim, wherein there is a plurality of said surface formations and said formations are spaced substantially evenly about the cap member (20).

6. An assembly according to any preceding Claim, wherein the cup-like body (28) tapers radially outwardly away from the end wall (25).

7. An assembly according to any preceding Claim, wherein the axle protrudes beyond a wheel rim of a wheel of the wheel assembly.

8. An assembly according to any preceding Claim, wherein the assembly is a main wheel assembly incorporating tyre pressure sensing means and the cap member (20) includes means for mounting said tyre pressure sensing means.

9. An aircraft incorporating at least one wheel assembly according to any preceding Claim.

10. A hubcap (20) for an aircraft wheel assembly which has an axle housing means for sensing wheel speed and means for sensing tyre pressure, the hub cap comprising a generally cup-like body (28) having an end wall (25), the body having a mouth and a flange (21) at said mouth for engagement with clamping means by which the hub cap (20) is fixed over a free end of the axle, the inner surface (26) of the end wall (25) having formations for engagement with the wheel speed sensing means **characterised in that** a slot (22) extends from the flange (21) into the side wall of the body (28) to receive components of the means for sensing tyre pressure, and **in that** ribs (27) are spaced about the exterior of the side wall of the body.

11. A hubcap according to Claim 10, wherein said ribs (27) are hollow.

12. A hubcap according to Claim 10 or 11, wherein the side wall of the body (28) flares radially outwardly away from the end wall (25) to the flange (21).

## Patentansprüche

1. Flugzeugradanordnung umfassend ein Achsgehäusemittel zum Erfassen einer Raddrehzahl, wobei ein Ende der Achse durch ein Kappenelement (20) abgedeckt ist, wobei das Kappenelement einen allgemein kappenähnlichen Körper (28) mit einer Abschlusswand (25) in Richtung des freien Endes der Achse und ein Mittel zum Antreiben des Raddrehzahlerfassungsmittels umfasst, **dadurch gekennzeichnet, dass** die Seitenwand des Körpers zumindest ein Versteifungsgebilde aufweist, das angeordnet ist, um die Strömung der Luft um das exponierte Äußere des Kappenelements (20) im Flug zu beeinflussen, um dabei den Pegel des erzeugten Lärms zu reduzieren.

2. Anordnung nach Anspruch 1, wobei das zumindest eine Gebilde eine Rippe oder eine Finne (27) auf der Seitenwand des kappenähnlichen Körpers (28) umfasst.

3. Anordnung nach Anspruch 1 oder 2, wobei zumindest ein Gebilde sich von der Abschlusswand (25) zu einem offenen Ende des kappenähnlichen Körpers (28) erstreckt und in der Dicke in Richtung des offenen Endes zunimmt.

4. Anordnung nach Anspruch 1, 2 oder 2, wobei zumindest ein Gebilde hohl ist.

5. Anordnung nach einem der vorhergehenden Ansprüche, wobei eine Mehrzahl von den Oberflächengebilden vorhanden ist und die Gebilde im Wesentlichen gleichmäßig um das Kappenelement (20) beabstandet sind.

6. Anordnung nach einem der vorhergehenden Ansprüche, wobei der kappenähnliche Körper (28) sich radial nach außen weg von der Abschlusswand (25) verjüngt.

7. Anordnung nach einem der vorhergehenden Ansprüche, wobei sich die Achse über eine Felge eines Rades der Radanordnung hinaus erstreckt.

8. Anordnung nach einem der vorhergehenden Ansprüche, wobei die Anordnung eine Hauptradanordnung mit einem Reifendruckerfassungsmittel ist und wobei das Kappenelement (20) ein Mittel zum Montieren des Reifendruckerfassungsmittels aufweist.

9. Flugzeug mit zumindest einer Radanordnung nach einem der vorhergehenden Ansprüche.

10. Radkappe (20) für eine Flugzeugradanordnung, die ein Achsgehäusemittel zum Erfassen einer Raddrehzahl und ein Mittel zum Erfassen eines Reifendrucks aufweist, wobei die Radkappe einen allgemeinen kappenähnlichen Körper (28) mit einer Abschlusswand (25) umfasst, wobei der Körper eine Öffnung und einen Flansch (21) an der Öffnung zur Zusammenwirkung mit einem Klammermittel aufweist, durch welches die Radkappe (20) über einem freien Ende der Achse fixiert wird, wobei die innere Oberfläche (26) der Abschlusswand (25) Gebilde zur Zusammenwirkung mit dem Raddrehzahlerfassungsmittel aufweist, **dadurch gekennzeichnet, dass** sich ein Schlitz (22) von dem Flansch (21) in die Seitenwand des Körpers (28) erstreckt, um Komponenten des Mittels zum Erfassen des Reifendrucks aufzunehmen, und **dadurch gekennzeichnet, dass** Rippen (27) um das Äußere der Seitenwand des Körpers beabstandet sind.

11. Radkappe nach Anspruch 10, wobei die Rippen (27) hohl sind.

12. Radkappe nach Anspruch 10 oder 11, wobei die Seitenwand des Körpers (28) sich radial nach außen weg von der Abschlusswand (25) zu dem Flansch (21) aufweitet.

## Revendications

1. - Ensemble de roue d'avion comprenant un boîtier d'arbre servant à détecter la vitesse de la roue, une extrémité de l'arbre étant couverte d'un élément de couvercle (20), le couvercle comprenant un corps en général en forme de coupe (28) ayant une paroi d'extrémité (25) dirigée vers l'extrémité libre de l'arbre et un élément de commande du dispositif de détection de la vitesse de la roue, **caractérisé en ce que** la paroi latérale du corps a au moins une partie de renfort agencée pour influencer l'écoulement de l'air autour de l'extérieur exposé de l'élément du couvercle (20) pendant le vol et réduire ainsi le niveau de bruit généré.

2. - Ensemble selon la revendication 1, dans lequel au moins une partie comprend une nervure ou ailette (27) sur la paroi latérale du corps en forme de coupe (28).

3. - Ensemble selon la revendication 1 ou 2, dans lequel au moins une partie s'étend depuis la paroi d'extrémité (25) jusqu'à une extrémité ouverte du corps en forme de coupe (28) et augmente en épaisseur vers l'extrémité ouverte.

4. - Ensemble selon les revendications 1, 2 ou 3, dans lequel au moins une partie est creuse.

5. - Ensemble selon l'une quelconque des revendications précédentes dans lequel il y a une pluralité des dites parties de surface et lesdites parties sont espacées de manière sensiblement homogène de l'élément de couvercle (20).

6. - Ensemble selon l'une quelconque des revendications précédentes dans lequel le corps en forme de coupe (28) diminue radialement vers l'extérieur depuis la paroi d'extrémité (25).

7. - Ensemble selon l'une quelconque des revendications précédentes dans lequel l'arbre déborde au-delà d'une jante de roue de l'ensemble de roue.

8. - Ensemble selon l'une quelconque des revendications précédentes dans lequel l'ensemble est une ensemble de roue principale comportant un dispositif de détection de la pression des pneus et l'élément de couvercle (20) comprend un dispositif de montage dudit dispositif de détection de la pression des pneus.

9. - Avion comprenant au moins un ensemble de roue selon l'une quelconque des revendications précédentes.

10. - Couvercle de moyeu (20) pour un ensemble de roue d'avion qui a un boîtier de logement d'arbre pour détecter la vitesse de la roue et un dispositif de détection de la pression des pneus, le couvercle de moyeu comprenant un corps en général en forme de coupe (28) ayant une paroi d'extrémité (25), le corps ayant une entrée et une bride (21) sur ladite entrée pour s'engrener avec le dispositif de serrage par lequel le couvercle de moyeu (20) est fixé sur une extrémité libre de l'arbre, la surface intérieure (26) de la paroi d'extrémité (25) ayant des parties pour s'engrener avec le dispositif de détection de la vitesse des roues, **caractérisé en ce qu'**une fente (22) s'étend de la bride (21) à l'intérieur de la paroi latérale du corps (28) pour recevoir les composants du dispositif de détection de la pression des pneus et **en ce que** des nervures (27) sont espacées de l'extérieur de la paroi latérale du corps.

11. - Couvercle de moyeu selon la revendication 10, dans lequel lesdites nervures (27) sont creuses.

12. - Couvercle de moyeu selon les revendications 10 ou 11, dans lequel la paroi latérale du corps (28) s'évase radialement à l'extérieur de la paroi d'extrémité (25) vers la bride (21).
